# EUROPEAN PATENT APPLICATION

(11) **EP 4 186 878 A1**
(43) Date of publication of application: **31.05.2023**
(21) Application number: 21210285.9
(22) Date of filing: 24.11.2021
(51) Int. Cl.: C04B 26/04, C08K 5/098

(54) **CURABLE RESIN COMPOSITION**

(71) Applicant: Sika Technology AG, 6340 Baar (CH)
(72) Inventor: Baldwin, Jenny Margaret, Wigan, WN1 3HN (GB); Martin, Ian, Clitheroe, BB7 9UN (GB); Gatrell, Mark, Chipping Preston, PR3 2QY (GB); Evans, Craig Edward, Farnworth Bolton, BL4 7JN (GB); Liska, Martin, Cambridge, CB23 8ST (GB)
(74) Representative: Sika Patent Attorneys

(57) **Abstract**

A curable resin composition, especially for use as a binder component of a paving joint composition, comprises:
a) a polybutadiene binder;
b) an organic cobalt salt;
c) an organic manganese salt.

## Description

### Technical field

The invention relates to a curable resin composition, especially for use as a binder component of a paving joint composition and to a mixture comprising the curable resin composition and an inorganic particulate material. Another aspect of the present invention is directed to the use of the mixture as a paving joint composition.

### Background art

Traditionally, joints between pavers, cobbles or setts have been filled with sand and cement mortar. However, mortar is difficult and time-consuming to apply and often stains the pavers during its application.

In an attempt to address these problems, special cement-free jointing compounds have been developed. For example, EP 1 706 363 B1 (Ecofil Limited) describes a filling material for use with paving flags and the like comprising at least one base material (e.g. sand, crushed glass, granite, basalt), at least one binder (e.g. drying oils of vegetable or synthetic origin, polybutadiene, alkyd resin or linseed oil), at least one cross-linking agent (e.g. metallic driers), a solvent and at least one cure retarder, wherein the cure retarder is methyl ethyl ketoxime.

However, many jointing compounds are not fully satisfactory with regard to curing speed, prevention of undesired skin formation or storage stability. Furthermore, safety requirements on chemical products are increasing more and more. Thus, substances harmful to health can only be used to a limited extent in the future.

There is thus a need to provide improved solutions, which do not have the above mentioned drawbacks or have them a lesser extent.

### Disclosure of the invention

It is an object of the present invention to provide improved solutions with regard to jointing compounds. In particular, the solutions should allow to provide improved paving joint composition. Thereby, the compositions should in particular have satisfactory curing speeds, and low tendency to skin formation and/or a sufficiently long storage stability.

Surprisingly, it has been found that this object can be achieved with the features of claim 1. Thus, the core of the present invention is related to a curable resin composition, especially for use as a binder component of a paving joint composition, comprising:
a) a polybutadiene binder;
b) an organic cobalt salt;
c) an organic manganese salt.

The inventive curable resin is an oxidatively curing system. It was found that the organic cobalt salt and the organic manganese salt when used in combination act as highly efficient catalysts for cross-linking the polybutadiene binder. When omitting the organic cobalt salt or the organic manganese salt in the formulation, the advantageous effect could not be achieved or only to a lesser extent.

The inventive curable resin can be used as a binder components in curable compositions such as e.g. in paving joint composition or in any other curable composition where similar requirements exist.

Especially, with the inventive curable resin composition it is possible to formulate curable compositions, in particular paving joint compositions, which are highly beneficial with regard to curing speed, skin formation and storage stability. At the same time, advantageous mechanical properties can be achieved.

Furthermore, the inventive curable resins can be formulated with substances that are relatively harmless. For example, there is no need for using methyl ethyl ketoxime which will be reclassified as carcinogen as from March 2022.

Additional aspects of the invention are subject of further independent claims. Particularly preferred embodiments are outlined throughout the description and the dependent claims.

### Ways of carrying out the invention

A first aspect of the present invention is related to a curable resin composition, especially for use as a binder component of a paving joint composition, comprising:
a) a polybutadiene binder;
b) an organic cobalt salt;
c) an organic manganese salt.

In particular, the curable resin composition comprises all of the components in mixed state. Especially, the curable resin composition is a fluid.

In particular, the polybutadiene binder is a liquid under ambient conditions, especially at 25°C and 101.325 Pa. Especially a viscosity of the polybutadiene binder is from 500 - 1'000 mPa·s, especially 650 - 900 mPa·s, when measured according to DIN EN ISO 3219:2021.

With respect to the overall weight of the curable resin composition, a proportion of the polybutadiene binder preferably is 75 - 99 wt.%, especially 80 - 95 wt.%, preferably 85 - 95 wt.%.

The polybutadiene binder preferably comprises a polybutadiene with a proportion of 1,4-cis double bonds higher than a proportion of 1,4-trans double bonds. Furthermore, preferably, a proportion of 1,2-vinyl double bonds is lower than the proportion of the 1,4-cis double bonds and lower than the 1,4-trans double bonds.

In particular, with respect to all double bonds of the polybutadiene, the proportion of 1,4-cis double bonds preferably is in the range of 70 - 80%, especially 75% and/or the proportion of 1,4-trans double bonds is in the range of 20 - 30%, especially 24%, and/or the proportion of the 1,2-vinyl double bonds is below 10%, in particular below 5% or below 2%, for example 1%.

Preferably, a mean molecular mass Mₙ of the polybutadiene binder is from 2'000 - 3'000 g/mol, especially from 2'500 - 2'700 g/mol, for example 2'600 g/mol. In the present context, the molecular mass is meant to be determined by GPC (gel permeation chromatography) with polystyrene as standard.

Although other polybutadienes might be used as well, these kind of polybutadienes turned out to be highly beneficial in terms of curing speed and mechanical strength development during curing.

An "organic cobalt salt" in particular is meant to be a salt of a cobalt cation and an organic anion. Likewise, an "organic manganese salt" in particular is meant to be a salt of a manganese cation and an organic anion. Thereby the organic anion can be any kind of organic compound, i.e. a compound consisting of carbon, hydrogen and optionally one or more types of heteroatoms.

In the present context, the term "salt" encompasses purely ionically bonded salts, double salts as well as coordination complexes in which a positively charged cation is surrounded by one or more ligand(s).

Preferably a weight ratio of the organic cobalt salt to the organic manganese salt is from 4 - 25, especially 5 - 15, in particular 9 - 11, for example 10. With these ratios, the advantages of the invention are particularly apparent. However, other ratios might be suitable as well for special applications.

Preferably, the organic cobalt salt is a cobalt alkyloate, preferably a cobalt alkyloate with 12 - 24 carbon atoms, in particular 14 - 18 carbon atoms. In a special embodiment, the cobalt alkyloate has a branched alkyl chain

Most preferably the organic cobalt salt is cobalt bis(2-ethylhexanoate) and/or cobalt neodecanoate.

Especially, with respect to the overall weight of the curable resin composition, a proportion of the organic cobalt salt is 0.05 - 5 wt.%, especially 0.1 - 2 wt.%, in particular 0.25 - 1.0 wt.%.

Likewise preferred, the organic manganese salt is a manganese alkyloate, preferably a manganese alkyloate with 12 - 24 carbon atoms, in particular 14 - 18 carbon atoms. Especially, the manganese alkyloate has a branched alkyl chain.

Most preferably the organic manganese salt is 2-ethylhexanoic acid manganese salt and/or manganese neodecanoate.

Especially, with respect to the overall weight of the curable resin composition, a proportion of the organic manganese salt is 0.005 - 3 wt.%, especially 0.01 - 1 wt.%, in particular 0.02 - 0.3 wt.%.

According to highly preferred embodiment, both, the organic cobalt salt and the organic manganese salt are alkyloates. Most preferably, the organic cobalt salt is cobalt bis(2-ethylhexanoate) and the organic manganese salt is 2-ethylhexanoic acid manganese salt.

Preferably, the curable resin composition furthermore comprises an anti-skinning agent. An "anti-skinning agent" is meant to be a substance capable of preventing or retarding the processes of formation of an insoluble skin on the surface of the curable resin composition. Typically, skinning is caused by oxidation or polymerization of the polybutadiene binder in the curable binder composition.

Especially, with respect to the overall weight of the curable resin composition, a proportion of the anti-skinning agent is 0 - 3 wt.%, especially 0.01 - 1 wt.%, in particular 0.05 - 0.5 wt.%.

Especially, the anti-skinning agent is an oxime-based anti-skinning agent.

More preferably, the oxime-based anti-skinning agent is a ketoxime, especially a compound of formula R¹R²C=N-OH, whereby R¹ is an alkyl group with 1 - 5 carbon atoms and R² is an alkyl group with 1 - 5 carbon atoms. Preferably, R¹ and R² are unbranched alkyl groups.

In particular, R¹ is a methyl group and R² is an alkyl group with 2 - 5 carbon atoms, especially 2 - 3 carbon atoms, most preferably a propyl group.

Especially the oxime-based anti-skinning agent is a methyl propyl ketoxime.

Oxime-based anti-skinning agents are highly effective and compatible with the polybutadiene binder and the salts comprised in the curable resin composition. This is in particular true for methyl propyl ketoxime, which in addition is less harmful than for example methyl ethyl ketoxime. Methyl propyl ketoxime is also known as 2-pentanone oxime.

Thus, especially preferred, with respect to the total weight if the curable resin composition, a proportion of methyl ethyl ketoxime in the curable resin composition is below 0.1 wt.%, especially below 0.01 wt.%, preferably below 0.001 wt.%.

Most preferred, the curable resin composition is free of methyl ethyl ketoxime.

According to a further preferred embodiment, the curable resin composition comprises a compatibilizer, especially for compatibilizing inorganic fillers and organic polymers. A compatibilizer in particular is meant to be an adhesion promotor between inorganic fillers and organic polymers. A compatibilizer is in particular beneficial if the curable resin composition is used in combination with inorganic materials, such as in paving joint compositions.

Especially, with respect to the overall weight of the curable resin composition, a proportion of the compatibilizer is 0 - 10 wt.%, preferably 0.1 - 6 wt.%, in particular 1 - 5 wt.%.

Preferably, the compatibilizer is an oligomeric siloxane.

Especially, the oligomeric siloxane is an olefinically functionalized siloxane oligomer, in particular a vinyl functionalized siloxane oligomer.

Preferably, the olefinically functionalized siloxane oligomer has not more than one olefinic radical on each of the silicon atoms in the oligomer. Particularly, the olefinic radical is a vinyl group. Furthermore, the olefinically functionalized siloxane oligomer preferably comprises an alkoxy group, especially a methoxy group, on the silicon atom.

In particular, the olefinically functionalized siloxane oligomer is a compound as described in paragraphs 0022 - 0032 of US patent application US 2015/0080531 A1, which is hereby incorporated by reference.

In a highly preferred embodiment, the compatibilizer or the olefinically functionalized siloxane oligomer, respectively, is an oligomeric siloxane with vinyl and methoxy functional groups. Such a compound is for example obtainable by partial hydrolysis and condensation of vinyltrimethoxysilane.

A suitable compatibilizer is for example Dynasylan^{®} 6490, which is available from Evonik Operations GmbH, Germany.

The above described compatibilizers are very well compatible with the further components of the curable resin composition. Additionally, they improve embedding of inorganic particulate materials, especially sands, in the curable resin composition upon curing. This results in improved mechanical properties of the cured products, such as e.g. cured paving joint compositions.

Furthermore, the curable resin composition preferably comprise a solvent. A solvent allows for improving the homogeneity of the curable resin composition and improving the overall curing speed.

Especially, with respect to the overall weight of the curable resin composition, a proportion of the solvent is 0 - 20 wt.%, especially 0.1 - 15 wt.%, in particular 1 - 12 wt.%, particularly 1.5 - 6 wt.%.

Preferably, the solvent comprises or consists of the list consisting of alcohol solvents, glycol ether solvents and hydrocarbon solvents, especially glycol ether solvents and hydrocarbon solvents. This is advantageous with respect to the compatibility of the solvent with the curable resin composition and the compressive strength of paving joint compositions obtained from such curable resin compositions.

More preferably, the solvent comprises or consists of one or more hydrocarbon solvents, especially hydrocarbon solvents with 8 - 15 carbon atoms, preferably with 9 - 13 carbon atoms. Such solvents turned out to be optimal in terms of achieving the inventive advantages.

Preferably, a main part of the solvent consists of the one or more hydrocarbon solvents. Especially, with respect to the total weight of all solvents, hydrocarbon solvents are present with a proportion of at least 50 wt.%, in particular at least 75 wt.%, especially at least 85 wt.%.

In another preferred embodiment, the solvent comprises a glycol ether, especially an alkyl ether of ethylene glycol and/or propylene glycol, preferably a propylene glycol methyl ether and/or di(propylene glycol) methyl ether. Especially, with respect to the total weight of all solvents, glycol ethers are present with a proportion of less than 50 wt.%, less than 25 wt.%, especially less than 15 wt.%. Thereby, preferably, a proportion of glycol ethers is at least 1 wt.%, in particular at least 5 wt.%, for example at least 10 wt.%, with respect to the total weight of all solvents.

Most preferably, the glycol ether is combined with the above described hydrocarbon solvents. Thereby, a proportion of the hydrocarbon solvents is higher than a proportion of the glycol ethers. In particular, the proportions of the glycol ether and the hydrocarbon solvents are chosen as described above.

These types of solvents are highly beneficial in the present context and in particular allow for obtaining curable resin compositions with advantageous curing speeds.

In a further preferred embodiment, the curable resin composition further comprises an organic calcium salt as a secondary dryer. Preferably the organic calcium salt is a calcium alkyloate, especially a calcium alkyloate with 10 - 24 carbon atoms, in particular 12 - 20 carbon atoms, most preferably the organic calcium salt is calcium bis(2-ethylhexanoate) and/or calcium dipropionate.

In a still further preferred embodiment, the curable resin composition comprises an organic iron salt, preferably the organic iron salt is an iron alkyloate, especially an iron alkyloate with 10 - 30 carbon atoms, in particular 15 - 25 carbon atoms, most preferably the organic calcium salt is 2-ethylhexanoate iron salt.

The organic calcium salt and the organic iron salt can be used for improving the overall performance of the curable resin composition.

In particular, the viscosity of the curable resin composition is from 100 - 1'000 mPa·s, especially 300 - 700 mPa·s, when measured according to DIN EN ISO 3219:2021.

According to a highly preferred embodiment, the curable resin composition comprises or consists of:
a) the polybutadiene binder;
b) the organic cobalt salt;
c) the organic manganese salt;
d) optionally, the anti-skinning agent;
e) optionally, the solvent;
f) optionally, the compatibilizer.

Thereby, preferably, the curable resin composition comprises the anti-skinning agent, the solvent and/or the compatibilizer. Especially, the curable resin composition comprises the anti-skinning agent and the solvent and the compatibilizer.

Especially, with respect to the overall weight of the curable resin composition, the curable resin composition comprises:
a) 75 - 99 wt.%, especially 80 - 95 wt.%, preferably 85 - 95 wt.% of a the polybutadiene binder;
b) 0.05 - 5 wt.%, especially 0.1 - 2 wt.%, in particular 0.25 - 1.0 wt.%, of the organic cobalt salt;
c) 0.005 - 3 wt.%, especially 0.01 - 1 wt.%, in particular 0.02 - 0.3 wt.%, of the organic manganese salt;
d) optionally, 0 - 3 wt.%, especially 0.01 - 1 wt.%, in particular 0.05 - 0.5 wt.% of the anti-skinning agent;
e) optionally, 0 - 20 wt.%, especially 0.1 - 15 wt.%, in particular 1 - 12 wt.%, particularly 1.5 - 6 wt.%, of the solvent;
f) optionally 0 - 10 wt.%, especially 0.1 - 6 wt.%, in particular 1 - 5 wt.%, of the compatibilizer.

In particular, with respect to the overall weight of the curable resin composition, the curable resin composition comprises:
a) 75 - 99 wt.%, especially 80 - 95 wt.%, preferably 85 - 95 wt.% of the polybutadiene binder, whereby with respect to all double bonds of the polybutadiene, the proportion of 1,4-cis double bonds preferably is in the range of 70 - 80%, especially 75% and/or the proportion of 1,4-trans double bonds is in the range of 20 - 30%, especially 24%, and/or the proportion of the 1,2-vinyl double bonds is below 10%, in particular below 5% or below 2%, for example 1%;
b) 0.05 - 5 wt.%, especially 0.1 - 2 wt.%, in particular 0.25 - 1.0 wt.%, of the organic cobalt salt, whereby the organic cobalt salt is a cobalt alkyloate, preferably cobalt bis(2-ethylhexanoate) and/or cobalt neodecanoate;
c) 0.005 - 3 wt.%, especially 0.01 - 1 wt.%, in particular 0.02 - 0.3 wt.%, of the organic manganese salt, whereby the organic manganese salt is a manganese alkyloate, preferably 2-ethylhexanoic acid manganese salt and/or manganese neodecanoate;
d) 0 - 3 wt.%, especially 0.01 - 1 wt.%, in particular 0.05 - 0.5 wt.% of the anti-skinning agent, whereby the anti-skinning agent is a ketoxime, preferably methyl propyl ketoxime;
e) 0 - 20 wt.%, especially 0.1 - 15 wt.%, in particular 1 - 12 wt.%, particularly 1.5 - 6 wt.%, of the solvent, whereby the solvent comprises or consists of a hydrocarbon solvent, especially a hydrocarbon solvents with 8 - 15 carbon atoms;
f) 0 - 10 wt.%, especially 0.1 - 6 wt.%, in particular 1 - 5 wt.%, of the compatibilizer, whereby the compatibilizer is an oligomeric siloxane, in particular an oligomeric siloxane with vinyl and methoxy functional groups.

Especially preferred, with respect to the overall weight of the curable resin composition, the curable resin composition comprises:
a) 85 - 95 wt.% of the polybutadiene binder, whereby with respect to all double bonds of the polybutadiene, the proportion of 1,4-cis double bonds is in the range of 70 - 80%, especially 75% and the proportion of 1,4-trans double bonds is in the range of 20 - 30%, especially 24%, and the proportion of the 1,2-vinyl double bonds is below 10%, in particular below 5% or below 2%, for example 1%;
b) 0.25 - 1.0 wt.%, of the organic cobalt salt, whereby the organic cobalt salt is a cobalt alkyloate, preferably cobalt bis(2-ethylhexanoate) and/or cobalt neodecanoate;
c) 0.02 - 0.3 wt.%, of the organic manganese salt, whereby the organic manganese salt is a manganese alkyloate, preferably 2-ethylhexanoic acid manganese salt and/or manganese neodecanoate;
d) 0.05 - 0.5 wt.% of the anti-skinning agent, whereby the anti-skinning agent is a ketoxime, preferably methyl propyl ketoxime;
e) 1.5 - 6 wt.%, of the solvent, whereby the solvent comprises or consists of a hydrocarbon solvent, especially a hydrocarbon solvents with 8 - 15 carbon atoms;
f) 1 - 5 wt.%, of the compatibilizer, whereby the compatibilizer is an oligomeric siloxane, in particular an oligomeric siloxane with vinyl and methoxy functional groups.

For example, with respect to the overall weight of the curable resin composition, the curable resin composition comprises:
a) 85 - 95 wt.% of the polybutadiene binder, whereby with respect to all double bonds of the polybutadiene, the proportion of 1,4-cis double bonds is in the range of 70 - 80%, especially 75% and the proportion of 1,4-trans double bonds is in the range of 20 - 30%, especially 24%, and the proportion of the 1,2-vinyl double bonds is below 10%, in particular below 5% or below 2%, for example 1%;
b) 0.25 - 1.0 wt.%, of the organic cobalt salt, whereby the organic cobalt salt is cobalt bis(2-ethylhexanoate) and/or cobalt neodecanoate;
c) 0.02 - 0.3 wt.%, of the organic manganese salt, whereby the organic manganese salt is 2-ethylhexanoic acid manganese salt and/or manganese neodecanoate;
d) 0.05 - 0.5 wt.% of the anti-skinning agent, whereby the anti-skinning agent is methyl propyl ketoxime;
e) 1.5 - 6 wt.%, of the solvent, whereby the solvent comprises or consists of a hydrocarbon solvent with 8 - 15 carbon atoms;
f) 1 - 5 wt.%, of the compatibilizer, whereby the compatibilizer is an oligomeric siloxane with vinyl and methoxy functional groups.

A second aspect of the present invention is related to a cured resin composition obtainable by curing the above described curable resin composition, especially under ambient conditions.

A third aspect of the present invention is directed to a mixture, especially a paving joint composition, comprising (i) a curable resin composition as described above and (ii) an inorganic particulate material. Such mixtures can for example be used as paving joint compositions.

The inorganic particulate material can for example be selected from silica, sand, glass, granite and/or basalt.

Preferably, the inorganic particulate material has a particle size ≤ 8 mm, in particular ≤ 6 mm, especially in the range of from 0.01 to 8 mm, especially 0.1 - 4 mm.

Preferably, with respect to the total weight of the mixture, the mixture comprises the curable resin composition with a proportion of 0.5 - 10 wt.%, especially 1 - 5 wt.%, and the inorganic particulate material with a proportion of 90 - 99.5 wt.%, especially 95 - 99 wt.%. This is in particular beneficial if the mixture is a paving joint composition. Thereby, for this application, highly suitable mechanical and chemical properties are obtainable with these proportions.

Further preferred, with respect to the total weight of the curable resin composition, a proportion of methyl ethyl ketoxime in the mixture is below 0.1 wt.%, especially below 0.01 wt.%, preferably below 0.001 wt.%. In particular, the mixture is essentially free of methyl ethyl ketoxime.

A fourth aspect of the present invention is directed to a cured mixture obtainable or obtained after curing the above described mixture, especially under ambient conditions.

A fifth aspect of the invention is concerned with the use of the above described curable resin composition as a binder component for an inorganic particulate material, especially as a binder component for sand, in particular as a binder component of a paving joint composition.

A sixth aspect of the invention is concerned with the use of the above mixture as a paving joint composition. Thereby, preferably, the inorganic particulate material is sand.

Further advantageous configurations of the invention are evident from the exemplary embodiments.

### Exemplary embodiments

### Substances

For the exemplary embodiments, the substances listed in table 1 were used.

**Table 1**

| **Abr.** | **Product** | **Comment** |
|---|---|---|
| **PB1** | Polyvest^{®} 110 (Evonik) | Liquid polybutadiene with 75% 1,4-cis double bonds; Viscosity: 700 - 860 mPa·s , 2600 g/mol |
| **PB2** | Polyvest^{®} HT (Evonik) | Liquid polybutadiene with 20% 1,4-cis double bonds |
| **Cat** | DriCAT CV100 | Cobalt/Manganese drier; Main components: |
| | | - ≈ 10-20% cobalt bis(2-ethylhexanoate) |
| | | - ≈ 1-2% 2-ethylhexanoic acid manganese salt |
| | | - Balance: Solvents (Hydrocarbon and dipropylene glycol methyl ether) |
| **Sol 1** | Hydrosol^{®} 75/95 (Bannner Chemicals) | C9-hydrocarbon solvent |
| **Sol 2** | Ethanol | Ethanol |
| **Sol 3** | Isopropanol | Isopropanol |
| **Sol 4** | Bannernol^{®} G (Bannner Chemicals) | Methoxy Propyl Acetate |
| **Com** | Dynasylan^{®} 6490 (Evonik | Compatibilization agent; oligomeric siloxane containing vinyl and methoxy groups |
| **ASA** | Duroxim P (Bodo Möller Chemie) | 2-Pentanone oxime |

### Curable resin composition

The following curable resin compositions CRC1 - CRC7 were produced by intermixing all of the components listed in table 2:

**Table 2 (all figures in wt. %)**

| **Component** | **CRC1** | **CRC2** | **CRC3** | **CRC4** | **CRC5** | **CRC6** | **CRC7** |
|---|---|---|---|---|---|---|---|
| **PB1** | 88.4 | 93.1 | - | 88.9 | 88.9 | 88.9 | 91.3 |
| **PB2** | - | - | 88.4 | - | - | - | - |
| **Com** | 2.8 | 3.0 | 2.8 | 2.8 | 2.8 | 2.8 | 2.9 |
| **Sol 1** | 5.1 | - | 5.1 | | | | 2.0 |
| **Sol 2** | | | | 4.6 | | | |
| **Sol 3** | | | | | **4.6** | | |
| **Sol 4** | | | | | | 4.6 | |
| **Cat** | 3.5 | 3.7 | 3.5 | 3.5 | 3.5 | 3.5 | 3.6 |
| **ASA** | 0.2 | 0.2 | 0.2 | 0.2 | 0.2 | 0.2 | 0.2 |

### Paving joint compositions

Paving joint composition were produced by mixing 2.5 wt.% of a curable binder composition (**CRC1- CRC7**; cf. table 2) and 97.5 wt.% sand with a hand mixer for two minutes. Immediately after mixing, the viscosities of the compositions **CRC1-CRC7** was found to be between 300 - 700 mPa·s, measured according to DIN EN ISO 3219:2021.

### Curing tests with paving joint compositions

The paving joint composition **T1 - T3** and **T8** were casted into molds in order to obtain sample cubes (4 cm × 4 cm × 4 cm). After curing for a given time at 5°C, the sample cubes were rated with a qualitative evaluation system as follows: 1 = very soft (sand moves away when poked); 2 = soft (sand has some structure; less flow than with 1); 3 = partially cured (block can be pierced with a spatula); 4 = fully cured (block cannot be pierced with a spatula anymore).

For reasons of comparison, a commercially available paving joint composition (Ecofil; Ecofil Ltd., UK) was tested in the same manner. This composition is referred to as **Ref.**

Table 3 gives an overview of the results obtained.

**Table 3, n.d. = not determined**

| **Test no.** | **Paving joint composition** | **Rating after 20 h of curing** |
|---|---|---|
| **T1** | Based on **CRC1** | 4 |
| **T2** | Based on **CRC2** | 3 |
| **T3** | Based on **CRC3** | 1 |
| **T4** | Based on **CRC4** | n.d. |
| **T5** | Based on **CRC5** | n.d. |
| **T6** | Based on **CRC6** | n.d. |
| **T7** | Based on **CRC7** | n.d. |
| **T8** | Ref | 3 |

As evident, test T1 with the paving joint composition based on curable resin composition **CRC1** is rated best after 20 h of curing at 5°C. Thus, curable resin composition **CRC1** results in a rather high curing speed. Furthermore, no significant skin formation could be observed in test T1 and the composition is free of methyl ethyl ketoxime.

The paving joint composition based on curable resin composition **CRC2** (without additional solvent) has a slower curing speed (test T2), which is similar to the reference composition Ref (test T8). Thus, the solvent clearly helps to increase curing speed. Remarkably, both the paving joint composition according to tests **T2** and T3 do not show skin formation and are completely free of methyl ethyl ketoxime.

### Stability tests with paving joint composition T1

The paving joint composition T1 was produced by mixing 2.5 wt.% of a curable binder composition **CRC1** and 97.5 wt.% sand with a hand mixer for two minutes. Within a maximum of two minutes, the mixed curable binder composition was put in air-tight bags, purged with N₂ and the bags were sealed with a vacuum heat sealer which ensures all air is expelled from the bags.

The bags were either opened and the mixed curable binder composition was stored for 28 days under water and the paving joint composition was then removed from the water and cast into 40x40x40mm cube molds and allowed to cure for 7 days at 23°C, or the bags were stored for 28 days in an oven at 50°C and the paving joint composition was then cast into 40x40x40mm cube molds and allowed to cure for 7 days at 23°C.

The compressive strength of these cubes was then tested according to EN196-1.

Table 4 gives an overview of the results obtained.

**Table 4**

| **Test no.** | 28 Days water storage/7 days cure Crush: (N/mm²) | 50°C 4 weeks/7 days cure Crush: (N/mm²) |
|---|---|---|
| **T1** | 2.1 | 8.3 |

After opening of the bags after both types of storage conditions, the content was found to be in the form of soft lumps that could easily be broken down. As evident, test **T1** with the paving joint composition based on curable resin composition **CRC1** shows high compressive strength values after both types of storage conditions.

### Compatibility and compressive strength tests with different solvents (T1, T4-T6)

The curable binder compositions **CRC1** and **CRC4-6** were mixed and assessed by eye immediately after mixing and again after 24 hours of storage at room temperature in an air-tight container.

The compositions were analyzed by eye for incompatibility of the solvent with the composition indicated by separation of the solvent out of the mixture. A rating of 1 - 3 was given with 1 being the best value with no separation being visible and a rating of 3 being the poorest value with haze/opacity appearance of the mixture.

Table 5 gives an overview of the results obtained.

**Table 5**

| **Test no**. | Immediately after mixing Compatibility rating: | 24 hours after mixing Compatibility rating: |
|---|---|---|
| **CRC1** | 1 | 1 |
| **CRC4** | 3 | 3 |
| **CRC5** | 2.5 | 2.5 |
| **CRC6** | 1 | 1 |

The paving joint compositions **T1** and **T4-T6** were produced by mixing 2.5 wt.% of a curable binder composition and 97.5 wt.% sand with a hand mixer for two minutes. The compressive strength was assessed by casting the paving joint compositions into 40x40x40mm cube moulds and cured for 24 hours at ambient conditions. The compressive strength of these cubes was then tested according to EN196-1.

Table 6 gives an overview of the results obtained.

**Table 6**

| **Test no.** | Compressive strength: (N/mm²) |
|---|---|
| **T1** | 4.1 |
| **T4** | 3.4 |
| **T5** | 4.3 |
| **T6** | 3.5 |

It will be appreciated by those skilled in the art that the present invention can be embodied in other specific forms without departing from the spirit or essential characteristics thereof. The presently disclosed implementations and embodiments are therefore considered in all respects to be illustrative and not restricted.

## Claims

1. Curable resin composition, especially for use as a binder component of a paving joint composition, comprising:
a) a polybutadiene binder;
b) an organic cobalt salt;
c) an organic manganese salt.

2. Curable resin composition according to claim 1, whereby, with respect to all double bonds of the polybutadiene, the proportion of 1,4-cis double bonds is in the range of 70 - 80%, especially 75% and/or the proportion of 1,4-trans double bonds is in the range of 20 - 30%, especially 24%, and/or the proportion of the 1,2-vinyl double bonds is below 10%, in particular below 5% or below 2%, for example 1%.

3. Curable resin composition according to any of preceding claims, whereby a weight ratio of the organic cobalt salt to the organic manganese salt is from 4 - 25, especially 5 - 15, in particular 9 - 11, for example 10.

4. Curable resin composition according to any of preceding claims, whereby the organic cobalt salt is a cobalt alkyloate, preferably a cobalt alkyloate with 12 - 24 carbon atoms, in particular 14 - 18 carbon atoms, most preferably the organic cobalt salt is cobalt bis(2-ethylhexanoate) and/or cobalt neodecanoate acid cobalt salt.

5. Curable resin composition according to any of preceding claims, whereby the organic manganese salt is a manganese alkyloate, preferably a manganese alkyloate with 12 - 24 carbon atoms, in particular 14 - 18 carbon atoms, most preferably the organic manganese salt is 2-ethylhexanoic acid manganese salt and/or manganese neodecanoate.

6. Curable resin composition according to any of preceding claims, whereby the anti-skinning agent is a ketoxime, especially a compound of formula R¹R²C=N-OH, whereby R¹ = alkyl group with 1 - 5 carbon atoms and R² = alkyl group with 1 - 5 carbon atoms.

7. Curable resin composition according to any of preceding claims, whereby the anti-skinning agent is methyl propyl ketoxime.

8. Curable resin composition according to any of preceding claims, whereby, with respect to the total weight if the curable resin composition, a proportion of methyl ethyl ketoxime in the curable resin composition is below 0.1 wt.%, especially below 0.01 wt.%, preferably below 0.001 wt.%.

9. Curable resin composition according to any of preceding claims, further comprising a compatibilizer, especially for compatibilizing inorganic fillers and organic polymers, whereby the compatibilizer is an oligomeric siloxane, especially containing vinyl and methoxy groups.

10. Curable resin composition according to any of preceding claims, further comprising a solvent, whereby the solvent comprises of one or more hydrocarbon solvents, especially hydrocarbon solvents with 8 - 15 carbon atoms, preferably with 9 -13 carbon atoms.

11. Curable resin composition according to any of preceding claims, comprising:
a) 85 - 95 wt.% of the polybutadiene binder, whereby with respect to all double bonds of the polybutadiene, the proportion of 1,4-cis double bonds preferably is in the range of 70 - 80%, especially 75% and the proportion of 1,4-trans double bonds is in the range of 20 - 30%, especially 24%, and the proportion of the 1,2-vinyl double bonds is below 10%, in particular below 5% or below 2%, for example 1%;
b) 0.25 - 1.0 wt.%, of the organic cobalt salt, whereby the organic cobalt salt is a cobalt alkyloate, preferably cobalt bis(2-ethylhexanoate) and/or cobalt neodecanoate;
c) 0.02 - 0.3 wt.%, of the organic manganese salt, whereby the organic manganese salt is a manganese alkyloate, preferably 2-ethylhexanoic acid manganese salt and/or manganese neodecanoate;
d) 0.05 - 0.5 wt.% of the anti-skinning agent, whereby the anti-skinning agent is a ketoxime, preferably methyl propyl ketoxime;
e) 1.5 - 6 wt.%, of the solvent, whereby the solvent comprises or consists of a hydrocarbon solvent, especially a hydrocarbon solvents with 8 - 15 carbon atoms;
f) 1 - 5 wt.%, of the compatibilizer, whereby the compatibilizer is an oligomeric siloxane, in particular an oligomeric siloxane with vinyl and methoxy functional groups.

12. Mixture, especially a paving joint composition, comprising (i) a curable resin composition according to any of claim 1 - 11 and (ii) an inorganic particulate material.

13. Mixture according to claim 12, whereby the inorganic particulate is sand.

14. Mixture according to any of claims 12 - 13, whereby, with respect to the total weight of the mixture, the mixture comprises the curable resin composition with a proportion of 0.5 - 10 wt.%, especially 1 - 5 wt.%, and the inorganic particulate material with a proportion of 90 - 99.5 wt.%, especially 95 - 99 wt.%.

15. Use of a mixture according to any of claims 12 - 14 as a paving joint composition.
